# EUROPEAN PATENT SPECIFICATION

(11) **EP 2 860 437 B1**
(45) Date of publication and mention of the grant of the patent: **13.03.2019**
(21) Application number: 14188171.4
(22) Date of filing: 08.10.2014
(51) Int. Cl.: F16L 55/035

(54) **Inlay for pipe clips**
Einlage für Rohrklemmen
Couche interne pour colliers de fixation de tuyauterie

(30) Priority: 14.10.2013 NL 2011610
(43) Date of publication of application: 15.04.2015
(73) Proprietor: J. van Walraven Holding B.V., 3641 RK Mijdrecht (NL)
(72) Inventor: Juzak, Marek, 3641 ZS Mijdrecht (NL); Van Walraven, Petrus Johannes Jacobus, 3641 KP Mijdrecht (NL)
(74) Representative: EP&C

(56) References cited:
- DE-A1- 4 029 090
- DE-A1-102007 052 701
- DE-U1-202012 103 440
- US-A- 3 856 245

## Description

The present invention relates to a vibration-isolating insert for a pipe clip, the vibration-isolating insert being adapted to bear against an inner circumference of a substantially annular pipe clip body and ultimately - in use - to be positioned between the outer circumference of a pipe and the pipe clip body, the vibration-isolating insert comprising an elongate strip of vibration-isolating material and having a pipe clip facing side and a pipe facing side, wherein the pipe facing side has a plurality of longitudinal ribs. At each of the lateral edges of the strip a rib is provided having a tip made of a more rigid (lower friction coefficient) material than the vibration isolating material of the strip. Said material with the lower friction coefficient has a greater hardness than said vibration-isolating material.

At least one longitudinal rib made of the vibration-isolating material is located between the ribs at the lateral edges, wherein the ribs at the lateral edges stand out above the at least one rib between them. The at least one longitudinal rib located between the ribs at the lateral edges has a tip made of the vibration-isolating material.

DE 40 29 090 discloses a vibration isolating insert for a pipe clip comprising a base strip of vibration isolating material. The strip has ribs made of vibration isolating material on a pipe facing side. These ribs include a rib at each of the lateral edges of the strip and ribs that are located between the ribs at the lateral edges. The ribs at the lateral edges exceed the other ribs in height and are provided at their tip with a lubricating means. The lubricating means can be a skin layer of a harder material, a plastic layer, a hardened surface of the rib or a lubricating film which is applied as a chemical film of which the fluid component is evaporated. The lubricating means allow that a pipe can slide in longitudinal direction over the ribs at the lateral edges of the pipe clip which is closed but not yet tightened while not contacting the other ribs. When the pipe clip is tightened the ribs at the lateral edges are compressed and the other ribs will engage the pipe surface.

Although the ribs at the lateral edges of this known insert stand out, there is still a risk that under load of a pipe sliding through the pipe clip, the standing out ribs at the lateral edges deform to such an extent that the pipe surface will engage the other, lower ribs. These lower ribs have no lubricating surface, whereby the friction is increased and the insert can still be pulled out of the pipe clip by the moving pipe.

In EP 413 883 A1 is shown an insert in which all the ribs are provided at the tip with a surface layer that reduces the frictional resistance with respect to the pipe. Thereby the pipe can slide more easily through the pipe clip and the risk that the insert is torn from the pipe clip by movement of the pipe is reduced.

The invention has for an object to provide an improved vibration-isolating insert for a pipe clip.

According to the invention this object is achieved by a vibration-isolating insert as outlined at the outset, wherein the ribs at the lateral edges are made entirely or for the larger part of the material with the lower friction coefficient.

The ribs at the lateral edges stand out above the other rib(s) between them and because of the harder material deform less easy than ribs made of vibration isolating material.

Therefore, when the pipe clip is in a pre-assembly state during installation of the pipe in the pipe clip(s), i.e. the pipe clip is closed, but not fully tightened, the ribs at the outer edges will contact the pipe surface. The entire ribs or larger part of the standing out ribs being made of the harder material, will reduce deformation of said ribs under load of a pipe sliding, thereby considerably reducing the risk of the pipe surface contacting the lower rib(s) during installation of a pipe. When the pipe clip is tightened, the lower rib or ribs, which have no tip of the lower friction material, will engage the pipe surface, whereby the grip on the pipe increases considerably and a good holding of the pipe by the pipe clip is provided. A pipe clip provided with the insert according to the invention provides a better holding of the pipe than a pipe clip with the insert of EP 413 883.

The material with the lower friction coefficient may be an elastomer with a greater hardness than the basic vibration-isolating elastomer. It may be a thermoplastic elastomer (TPE). It is also conceivable to use plastic materials could be used as the friction reducing material.

In a further embodiment lateral sides of the vibration-isolating element are made of the material with the greater hardness.

In a further possible embodiment only the ribs at the lateral edges are provided with transverse cutouts which are provided over the length of the strip, preferably at regular intervals. These cutouts have the effect that the insert can be better fitted in the round pipe clip body. If the more rigid outer ribs are not provided with cutouts, the ribs may tend to their greater rigidness bend outwardly when the strip is shaped into a round configuration within the pipe clip. By this bending of the outer ribs, their tips become located lower with respect to the remainder of the pipe facing side of the strip. As a consequence the lower ribs without a friction reducing tip can engage the pipe surface whereby the effect of the lower friction during installation of the pipe in the pipe clip is lost or at least partly lost. This tendency to bend outward is stronger when the entire rib or the major part of the rib is made of the more rigid (lower friction) material. The cutouts overcome this problem.

In a possible embodiment the material with the lower friction coefficient is coextruded with the vibration-isolating material.

In a preferred embodiment the vibration-isolating material is an elastomer such as rubber.

The invention also relates to a pipe clip for attaching a pipe to a wall, ceiling or other support, wherein the pipe clip is provided with a vibration-isolating insert as described in the above.

The invention will be elucidated in the following detailed description with reference to the drawing, in which:
Fig. 1 shows a view in perspective of a piece of an embodiment of a vibration-isolating insert according to the invention;
Fig. 2 shows a cross section of the vibration-isolating insert of Fig. 1;
Fig. 3 shows a cross section of the vibration-isolating insert of Fig. 1 mounted on a pipe clip body in an non-tensioned state;
Fig. 4 shows a cross section of the vibration-isolating insert of Fig. 1 mounted on a pipe clip body in a tensioned state;
Fig. 5 shows a view in perspective of a piece of a further embodiment of a vibration-isolating insert according to the invention;
Fig. 6 a view in perspective of a piece of a yet another embodiment of a vibration-isolating insert according to the invention; and
Fig. 7 shows a side elevational view of a pipe clip provided with a vibration-isolating insert.

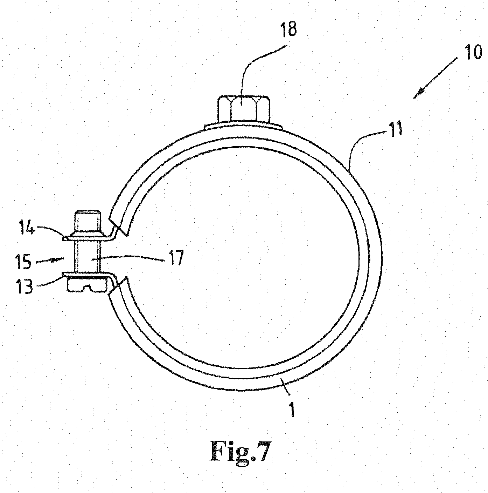

Fig. 7 shows a pipe clip 10 for attaching a pipe to a wall, ceiling or other support. The pipe clip 71 comprises an annular, single-part clip body 11 made from metal, in particular from a steel strip, which clip body 11 is substantially dimensionally stable and has two adjacent clip-body ends 13, 14, which between them form a passage opening 15 for a pipe (not shown) which is to be surrounded by the pipe clip 10. The inner side of the clip body 11 is lined with a vibration isolating insert.

In this case, the clip-body ends 13, 14 are designed as flanges which are directed radially outwards and are obtained by bending the end parts of the steel strip. In order to join together the clip-body ends 13, 14, which is usually done after the pipe (not shown) has been placed inside the pipe clip 10, in this example a screw 17 is provided. In this case, one clip-body end 13 is designed to accommodate the head of the screw 17 and the other clip-body end 14 is designed to accommodate the threaded shank of the screw 17.

Furthermore, a female fastening element 18, for example a threaded nut, is arranged on the metal clip body 11, which female fastening element is used to attach the pipe clip 10 to a male fastening element, for example a threaded rod, which is provided with an external screw thread, which male fastening element forms the connection between the pipe clip 10, on the one hand, and the wall, ceiling or other support, on the other hand. A male fastening element of this kind usually has an M8 or M10 screw thread, but another screw thread or a thread-like ribbed profile is also possible.

It is noted that the single part clip body is a non-limiting example and that pipe clip body can also be constituted for example by two clip halves, each with flanges formed at their ends, as is well known in the art. The flanges of the respective pipe clip body halves can be tensioned towards each other by screws or the like. Each of the halves is then provided with a piece of vibration-isolating insert material.

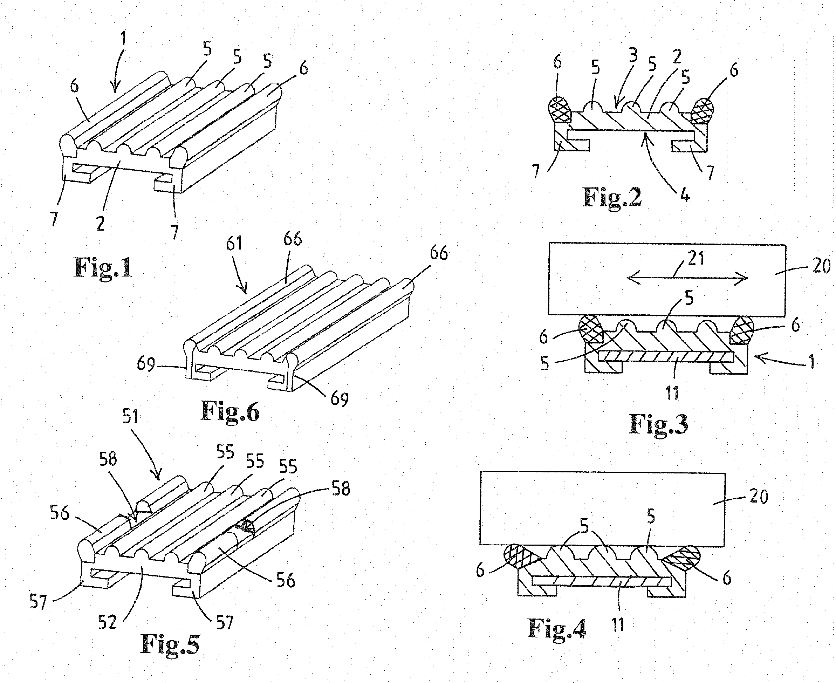

Figs 1 and 2 show a piece of vibration-isolating insert material to be arranged in a pipe clip body 11 to provide a vibration isolation between the pipe clip body 11, and the pipe around which the pipe clip is arranged. The vibration-isolating insert 1 comprises an elongate strip 2 of vibration isolating material. The strip 2 has a pipe facing side 3 and a pipe clip facing side 4.

The pipe facing side 3 of the strip 2 is provided with longitudinal ribs 5, 6 that define the contact portions which in use engage the pipe surface. There are two outer ribs 6 that are located at the lateral edges of the strip 2. Between the two outer ribs 6 there are a number of ribs 5. In the example of Figs 1 and 2 there are three of such ribs 5 but this can be a different number.

At the lateral edges extending towards the pipe clip facing side the strip 2 is provided with gripping formations 7. The gripping formations 7 are in this case generally L-shaped profiles formed on the base strip 2.

The strip 2 may be made of rubber or another elastomer material with good vibration isolating properties. In the embodiment of Figs 1 and 2 the outer ribs 6 are made of a different material than the strip 2 with the ribs 5 and the gripping formations 7. The material that is used for the outer ribs 6 is a material with a lower friction coefficient. This can for example be a more rigid elastomer than the one used for the strip 2 and the associated parts. In particular a thermoplastic elastomer (TPE) can be suitable. Also the use of a plastic material as PE or POM is conceivable.

The material of the strip 2 and of the ribs 6 can be attached to each other by coextrusion.

In an unloaded state the outer ribs 6 have a greater height than the other ribs 5 that are located between them seen in width direction. In other words, in an unloaded state the outer ribs 6 stand out above the other ribs 5 and other parts on the pipe facing side. The effect of this is illustrated in Fig. 3, in which schematically the insert 1 is shown that is arranged on an annular pipe clip body 11. A part of the pipe that is arranged in the pipe clip body is depicted schematically and is indicated by reference numeral 20. During installation of a pipe 20 in the pipe clip, the pipe clip has not been tightened yet around the pipe. The pipe 20 needs to be moved in axial direction to position it correctly. The axial direction of movement is indicated in Fig. 3 by double arrow 21. During positioning the pipe, it thus slides through the pipe clip. Because the outer ribs 6 stand out above the other parts of the pipe facing side of the vibration isolating insert 1, the tips of the outer ribs 6 are initially the only parts of the insert 1 that engage the pipe 20. Because the tip of the ribs 6 preferably have a rounded shape there is basically only a line contact between the pipe surface and the outer ribs 6 of the insert 1. Such a minimal contact surface between the pipe 20 and the pipe clip insert 1 results in a reduced friction during installation of the pipe, whereby the installation of the pipe is made more easy. This effect is even more apparent when the pipe 20 has to be arranged in several pipe clips at the same time. By making the standing out ribs 6, or at least the tips thereof, of a material with a lower friction coefficient than the vibration isolating material of the remainder of the insert 1, the frictional resistance to move the pipe 20 through the pipe clip(s) is further reduced.

When the pipe is in its final position the pipe clip 10 can be tightened around the pipe, usually by means of one or more a tightening screws, as is for example shown in Fig 7. By tightening the pipe clip around the pipe, the pipe facing side of the insert 1 is pressed onto the outer pipe surface. By this radial pressure the outer ribs 6 are deformed whereby the ribs 5 between the outer ribs 6 eventually engage the pipe surface as well. This is illustrated in Fig. 4. The ribs 5 may now also be deformed by compression. In this state the contact surface between the insert 1 and the pipe 20 has been increased with respect to the state that is shown in Fig. 3. Furthermore, the ribs 5 are made of the softer vibration isolating material, which provides considerably more friction resistance between the insert 1 and the pipe surface. Hence in this state the grip on the pipe 20 by the pipe clip is increased considerably and the pipe 20 is fixed securely in its final position.

In Fig. 4 is shown that the outer ribs 6 are bended outwards but the relative height with respect to the other ribs may also become lower by compression of the ribs 6.

In Fig. 5 is shown a vibration isolating insert 51 which is similar with the insert 1 shown in Figs 1 - 4. The same parts are thus indicated by the same reference numerals with 50 added to it and for a description reference is made to the above description. The difference between the insert 51 and the insert 1 is that in the insert 51 the outer ribs 56 are provided with cutouts 58. In Fig. 5 only a short piece of the insert 51 is shown and thus only one cutout 58 per rib 56 is visible, but it must be understood that the cutouts 58 are distributed over the length of the ribs 56. Preferably the cutouts 58 are provided at regular intervals, but it is also conceivable to provide them in another pattern.

With the insert 1 of Fig. 1 the problem may arise that when the insert is arranged in a pipe clip, especially if the diameter of the pipe clip is relatively small, that the outer ribs, which are made of the more rigid material, have the tendency to bend outwards. The shape of the outer ribs 6 that results can be compared with the shape that is shown in Fig. 4. Thus the relative height of the outer ribs 6 with respect to the other ribs 5 decreases and the outer ribs 6 do not stand out anymore. Thereby the effect of the smaller contact surface with a relatively low friction coefficient (as described in the above with reference to Fig. 3) is lost partly or entirely. The cutouts 58 provide a solution for this problem, because a rib portion of the rib 56 between the cutouts 58 has more space to conform to the round shape and less tension in the material is caused. Thereby the bending effect is mitigated and the insert 51 also functions well when it is fitted in a small radius pipe clip.

In Fig. 6 another vibration isolating insert is shown. In this insert 61, the outer side of the lateral sides 69 and a part, preferably a major part, of the outer ribs 66 formed at the lateral edges are made of a more rigid material or a material with a lower friction than the remainder of the insert, which is made of a softer vibration isolating material such as rubber or another suitable elastomer. The structure of the insert 61 provides a more rigid fixing of the insert 61 on the pipe clip body.

The lower friction material is in a practical embodiment a more rigid material than the vibration isolating material. Preferably the direct contact with the more rigid material with the pipe clip body is avoided because that would reduce the vibration isolating effect.

In the insert 61 the inner side of the lateral sides is provided with the softer material as is clearly visible in Fig. 6. Thus it is avoided that the more rigid material directly contacts the metal pipe clip body and the pipe, which would reduce the vibration isolating effect of the insert.

## Claims

1. Vibration-isolating insert (1; 51; 61) for a pipe clip (10), the vibration-isolating insert (1; 51; 61) being adapted to bear against an inner circumference of a substantially annular pipe clip body and ultimately - in use - to be positioned between the outer circumference of a pipe and the pipe clip body, the vibration-isolating insert (1; 51; 61) comprising an elongate strip (2; 52) of vibration-isolating material and having a pipe clip facing side and a pipe facing side, wherein the pipe facing side has a plurality of longitudinal ribs (5, 6; 55, 56; 66), wherein:
at each of the lateral edges of the strip a rib (6; 56; 66) is provided having a tip made of a material with a lower friction coefficient than the vibration isolating material of the strip, wherein said material with the lower friction coefficient has a greater hardness than said vibration-isolating material,
at least one longitudinal rib (5; 55) made of the vibration isolating material is located between the ribs (6; 56; 66) at the lateral edges,
the ribs at the lateral edges stand out above the at least one rib between them,
the at least one longitudinal rib (5, 55) located between the ribs (6, 56, 66) at the lateral edges has a tip made of the vibration isolating material,
**characterised in that** the ribs (6, 56, 66) at the lateral edges are made entirely or for the larger part of said material with the lower friction coefficient.

2. Vibration-isolating insert according to claim 1, wherein only the ribs (56) at the lateral edges are provided with transverse cutouts (58) which are provided over the length of the strip.

3. Vibration-isolating insert according to claim 2, wherein the transverse cutouts are provided at regular intervals.

4. Vibration-isolating insert according to any one of the preceding claims, wherein said material with the lower friction coefficient is coextruded with said vibration-isolating material.

5. Vibration-isolating insert according to any one of the preceding claims, wherein said vibration-isolating material is an elastomer such as rubber.

6. Vibration-isolating insert according to any one of the preceding claims, wherein said material with the lower friction coefficient is an elastomer, e.g. a thermoplastic elastomer (TPE).

7. Pipe clip (10) for attaching a pipe to a wall, ceiling or other support, said pipe clip (10) being provided with a vibration-isolating insert (1; 51; 61) according to any one of the preceding claims.

## Patentansprüche

1. Schwingungsdämpfender Einsatz (1; 51; 61) für eine Rohrschelle (10), wobei der schwingungsdämpfende Einsatz (1; 51; 61) dazu eingerichtet ist, gegen einen Innenumfang eines im Wesentlichen ringförmigen Rohrschellenkörpers anzuliegen und letztlich - bei Gebrauch - zwischen dem Außenumfang eines Rohrs und dem Rohrschellenkörper positioniert zu werden, wobei der schwingungsdämpfende Einsatz (1; 51; 61) einen langgestreckten Streifen (2; 52) aus schwingungsdämpfendem Material umfasst und eine der Rohrschelle zugewandte Seite sowie eine dem Rohr zugewandte Seite aufweist, wobei die dem Rohr zugewandte Seite eine Vielzahl von Längsrippen (5, 6; 55, 56; 66) aufweist, wobei:
an jedem der Seitenränder des Streifens eine Rippe (6; 56; 66) vorgesehen ist, die eine Spitze aufweist, welche aus einem Material mit einem niedrigeren Reibungskoeffizienten als das schwingungsdämpfende Material des Streifens besteht, wobei das Material mit dem niedrigeren Reibungskoeffizienten eine größere Härte als das schwingungsdämpfende Material aufweist, wenigstens eine aus dem schwingungsdämpfenden Material bestehende Längsrippe (5; 55) zwischen den Rippen (6; 56; 66) an den Seitenrändern angeordnet ist,
die Rippen an den Seitenrändern oben über die wenigstens eine Rippe zwischen diesen vorstehen,
die wenigstens eine Längsrippe (5; 55), die zwischen den Rippen (6; 56; 66) an den Seitenrändern angeordnet ist, eine Spitze aufweist, die aus dem schwingungsdämpfenden Material besteht,
**dadurch gekennzeichnet, dass** die Rippen (6, 56, 66) an den Seitenrändern vollständig oder größtenteils aus dem Material mit dem niedrigeren Reibungskoeffizienten bestehen.

2. Schwingungsdämpfender Einsatz nach Anspruch 1, wobei nur die Rippen (56) an den Seitenrändern mit quer verlaufenden Ausschnitten (58) versehen sind, die über die Länge des Streifens vorgesehen sind.

3. Schwingungsdämpfender Einsatz nach Anspruch 2, wobei die quer verlaufenden Ausschnitte in regelmäßigen Abständen vorgesehen sind.

4. Schwingungsdämpfender Einsatz nach einem der vorhergehenden Ansprüche, wobei das Material mit dem niedrigeren Reibungskoeffizienten mit dem schwingungsdämpfenden Material coextrudiert wird.

5. Schwingungsdämpfender Einsatz nach einem der vorhergehenden Ansprüche, wobei das schwindungsdämpfende Material ein Elastomer, wie Gummi, ist.

6. Schwingungsdämpfender Einsatz nach einem der vorhergehenden Ansprüche, wobei das Material mit dem niedrigeren Reibungskoeffizienten ein Elastomer, z. B. ein thermoplastisches Elastomer (TPE), ist.

7. Rohrschelle (10) zum Befestigen eines Rohrs an einer Wand, Decke oder einem anderen Träger, wobei die Rohrschelle (10) mit einem schwingungsdämpfenden Einsatz (1; 51; 61) nach einem der vorhergehenden Ansprüche versehen ist.

## Revendications

1. Insert isolant des vibrations (1; 51; 61) pour un collier de fixation de tuyau (10), l'insert isolant des vibrations (1; 51; 61) étant conçu pour venir en appui contre une circonférence intérieure d'un corps de collier de fixation de tuyau sensiblement annulaire et pour finalement - en cours d'utilisation - être positionné entre la circonférence extérieure d'un tuyau et le corps du collier de fixation de tuyau, l'insert isolant des vibrations (1; 51; 61) comprenant une bande allongée (2; 52) en matériau isolant des vibrations et ayant un côté prévu pour faire face au collier de fixation de tuyau et un côté prévu pour faire face au tuyau, dans lequel le côté prévu pour faire face au tuyau a une pluralité de nervures longitudinales (5, 6; 55, 56; 66), dans lequel:
à chacun des bords latéraux de la bande, une nervure (6; 56; 66) est prévue, avec une extrémité constituée d'un matériau ayant un coefficient de frottement inférieur à celui du matériau isolant des vibrations de la bande, dans lequel ledit matériau avec le coefficient de frottement inférieur a une dureté supérieure à celle dudit matériau isolant des vibrations,
au moins une nervure longitudinale (5; 55) constituée du matériau isolant des vibrations est située entre les nervures (6; 56; 66) au niveau des bords latéraux,
les nervures au niveau des bords latéraux font saillie vers le dessus de la au moins une nervure entre elles,
la au moins une nervure longitudinale (5, 55) située entre les nervures (6, 56, 66) au niveau des bords latéraux a une extrémité constituée du matériau isolant des vibrations,
**caractérisée en ce que** les nervures (6, 56, 66) au niveau des bords latéraux sont constituées entièrement ou pour la plus grande partie dudit matériau avec le coefficient de frottement inférieur.

2. Insert isolant des vibrations selon la revendication 1, dans lequel seules les nervures (56) au niveau des bords latéraux sont pourvues de découpes transversales (58) qui sont ménagées sur la longueur de la bande.

3. Insert isolant des vibrations selon la revendication 2, dans lequel les découpes transversales sont ménagées à intervalles réguliers.

4. Insert isolant des vibrations selon l'une quelconque des revendications précédentes, dans lequel ledit matériau ayant le coefficient de frottement inférieur est co-extrudé avec ledit matériau isolant des vibrations.

5. Insert isolant des vibrations selon l'une quelconque des revendications précédentes, dans lequel ledit matériau isolant des vibrations est un élastomère tel que du caoutchouc.

6. Insert isolant des vibrations selon l'une quelconque des revendications précédentes, dans lequel ledit matériau ayant le coefficient de frottement inférieur est un élastomère, par ex. un élastomère thermoplastique (TPE).

7. Collier de fixation de tuyau (10) pour fixer un tuyau à un mur, un plafond ou à un autre support, ledit collier de fixation de tuyau (10) étant muni d'un insert isolant des vibrations (1; 51; 61) selon l'une quelconque des revendications précédentes.
